# EUROPÄISCHE PATENTSCHRIFT

(11) **EP 0 812 379 B1**
(45) Veröffentlichungstag und Bekanntmachung des Hinweises auf die Patenterteilung: **14.10.1998**
(21) Anmeldenummer: 96904720.8
(22) Anmeldetag: 27.02.1996
(51) Int. Cl.: F01L 1/047, F16H 53/02, B21D 53/84

(54) **GEFÜGTE MEHRLAGENWELLEN**
ASSEMBLED MULTI-LAYER SHAFTS
ARBRES A PLUSIEURS COUCHES ASSEMBLES

(30) Priorität: 27.02.1995 DE 19506732; 23.02.1996 DE 19606732
(43) Veröffentlichungstag der Anmeldung: 17.12.1997
(73) Patentinhaber: Emitec Gesellschaft für Emissionstechnologie mbH, 53797 Lohmar (DE)
(72) Erfinder: SWARS, Helmut, D-51429 Bergisch-Gladbach (DE)
(74) Vertreter: Manderla, Thomas, Dr.
(86) Internationale Anmeldenummer: DE9600357
(87) Internationale Veröffentlichungsnummer: WO9627077

(56) Entgegenhaltungen:
- EP-A- 0 292 795
- EP-A- 0 324 498
- DE-A- 2 232 438
- DE-A- 2 914 095
- DE-A- 4 306 621
- GB-A- 2 121 908

## Beschreibung

Die Erfindung betrifft aufgebaute hohle Wellen, bestehend aus einem Innenwellenrohr mit außenliegenden Funktionselementen, gefügt durch in Achsrichtung abschnittsweises radiales Aufweiten, wobei das Innenwellenrohr in den Aufweitabschnitten plastisch sowie die Funktionselemente in den Aufweitabschnitten nur elastisch verformt sind und die Aufweitabschnitte zwischen den Funktionselementen liegen, wobei die Funktionselemente teilweise zu Mehrfachfunktionselementen zusammengefaßt sind, sowie Verfahren zur Herstellung solcher Wellen und von Mehrfachfunktionselementen zum Einsatz für die Herstellung von aufgebauten hohlen Wellen.

Auf dem Gebiet von Antriebs- und Steuerwellen in Verbrennungskraftmaschinen, insbesondere bei Nockenwellen, stellt sich mit dem Vordringen der Mehrventiltechnik immer mehr das Problem, Wellen mit vielen eng nebeneinanderliegenden Elementen wie Nocken und sonstigen Funktionsteilen sowie Gleitlagern und Axialanschlägen zu bauen. Dies bereitet mit konventioneller Technik zunehmend Schwierigkeiten. Insbesondere bei Wellen mit größeren Durchmessern kommt das Problem des in quadratischer Funktion ansteigenden Gewichts hinzu.

Interessante Ansätze zur Lösung dieses Komplexes gibt es insbesondere auf dem Gebiet aufgebauter hohler Nockenwellen. Dabei lassen sich die Probleme des Nockenabstandes bei sinkendem Gewicht lösen, jedoch ergeben sich gleichzeitig Schwierigkeiten mit sinkender Torsionssteifigkeit. Außerdem wird die Zahl der auf der Welle aufzubringenden und exakt zu positionierenden Funktionselemente dabei sehr groß. Besonders bei LKW-Wellen, insbesondere für Dieselmotoren, kommt zu diesem Problem hinzu, daß die Wandstärke der Hohlwellen wegen der erforderlichen Torsionssteifigkeit, auch im Hinblick auf den einlagigen Aufbau zwischen den Funktionselementen, relativ dick gehalten werden muß, so daß sich der Vorteil der Gewichtsreduzierung nicht in gewünschtem Maße realisieren läßt. Besonders bei langen Wellen ist die Vorbereitungszeit vor dem Fügen, beispielsweise durch das langsame Einfahren der Hochdrucksonden in die Hohlwelle, sehr langwierig und reduziert die Produktivität teurer Investitionsmittel.

Eine Reduzierung zumindest einiger der vorgenannten Probleme beim Herstellen aufgebauter hohler Wellen läßt sich durch den Einsatz von Mehrfachfunktionselementen, z. B. Mehrfachnocken erzielen. Vorschläge hierzu sind bekannt, beispielsweise die Herstellung von Mehrfachnocken aus Rohrprofilen durch Twisten oder durch die Herstellung von Mehrfachnocken aus Blechzuschnitten, die entsprechend profiliert und zu einem Ringkörper umgeformt und geschweißt werden.

Bei dem erstgenannten Vorschlag besteht jedoch das Problem, daß es auf einheitliche Nockenprofile begrenzt ist und keine große Steifigkeit der Nocken gegen Außendruck, z. B. Stößelpressung vorliegt. Bei beiden Vorschlägen besteht eine sehr starke Einschränkung bzgl. der Spreizung bzw. unterschiedlicher Winkelteilung der Nockenspitzen über den Umfang, was beim zweitgenannten Vorschlag nur durch eine sehr aufwendige Verfahrensvariante überbrückt werden kann.

Aus der EP-A-292 795 sind gattungsgemäße Hohlwellen bekannt. Darin werden Doppelnockenelemente beschrieben, bei denen ein Aufweitabschnitt zwischen den beiden außenliegenden Nockenabschnitten angeordnet ist. Der Grund für diesen Aufbau ist der, daß die Nockenabschnitte des einstückigen Doppelnockens nachträglich gehärtet werden und wegen der Versprödung nicht in erforderlichem Maße elastisch verformbar sind, so daß nur die nichtgehärteten Mittelabschnitte aufgeweitet werden. Diese Doppelnocken habe jedoch den Nachteil, daß die Nockenabschnitte deutlich voneinander beabstandet sein müssen, wodurch die Konstruktion von Wellen mit vielen eng nebeneinanderliegenden Funktionselementen erschwert oder verhindert wird. Außerdem ist die Zusammenfassung auf zwei Elemente gleicher Funktion bzw. Beanspruchung beschränkt.

Der Erfindung liegt das technische Problem zugrunde, neuartige Konstruktionen für aufgebaute hohle Wellen mit außenliegenden Funktionselementen, die die vorgenannten Probleme vermeiden und die vorteilhaft und wenig aufwendig in der Herstellung sind, sowie Verfahren vorzuschlagen, mit denen solche Wellen und Mehrfachfunktionselemente mit hoher Produktivität, größter Exaktheit und wenig aufwendig hergestellt werden können.

Dieses Problem wird erfindungsgemäß dadurch gelöst, daß gattungsgemäße aufgebaute hohle Wellen so ausgebildet werden, daß die Mehrfachfunktionselemente aus mehreren Einzelteilen bestehen, die in axialer Richtung zusammengesetzt sind, wobei nichtrunde Einzelteile in axialer Richtung konzentrisch zum Grundkreis ringförmige Ansätze aufweisen, deren Innendurchmesser geringfügig größer ist als der Außendurchmesser des Innenwellenrohrs, wobei die Ansätze an den Seiten, die nichtrunden Einzelteilen benachbart sind, einen ringförmigen Steg etwas halber Wandstärke derart aufweisen, daß er sich mit dem benachbarten nichtrunden Einzelteils zu voller Wandstärke ergänzt, und runde Einzelteile einen Innendurchmesser haben, der genau auf den Außendurchmesser der ringförmigen Ansätze paßt, sowie durch ein Verfahren zur Herstellung von aufgebauten hohlen Wellen, wobei das abschnittsweise Aufweiten durch hydraulischen Innenhochdruck erfolgt und die Hydraulikflüssigkeit durch eine Sonde in die Hohlwelle geführt wird, wobei der Sondenaußendurchmesser nur geringfügig kleiner ist als der Welleninnendurchmesser und die Sonde gegen die Hohlwelle an den beiden axialen Enden der Aufweitabschnitte durch Dichtelemente abgedichtet wird, dadurch gekennzeichnet, daß die Sonden, die einen lösbaren Hochdruck-Schnellanschluß aufweisen, vor dem Anschluß an den Hochdruckerzeuger in die Welle eingeführt und placiert werden und mehrere fertig zusammengesetzte und mit Sonden bestückte Wellen gleichzeitig an den Hochdruckerzeuger angeschlossen und durch Aufweiten gefügt werden, sowie durch ein Verfahren zur Herstellung von Mehrfachfunktionselementen, insbesondere von Mehrfachnocken, zum Einsatz für die Herstellung von aufgebauten hohlen Wellen mit außenliegenden Funktionselementen, insbesondere Nockenwellen, bei denen die einzelnen Funktionselemente aus Rohren mit den Funktionselementen entsprechendem Profil (d. h. Profilrohren) hergestellt und zu Mehrfachnocken zusammengesetzt werden, wobei die nichtrunden Funktionselemente in axialer Richtung zum Grundkreis konzentrische, ringförmige Ansätze aufweisen, deren Innendurchmesser geringfügig größer ist als der Außendurchmesser des Wellenrohrs, und die an ihren Seitenkanten einen ringförmigen Bereich etwa halber Wandstärke derart aufweisen, daß er sich mit dem des benachbarten nichtrunden Funktionselements 2 zur vollen Wandstärke ergänzt, und wobei die ringförmigen Ansätze durch Rückformung des Profilrohrs hergestellt werden.

Durch die Verwendung von erfindungsgemäßen Mehrfachnocken lassen sich eine ganze Reihe von Vorteilen realisieren. Bei in der nachfolgenden Figur A dargestellten Beispielen, die Einlaßnocken, Auslaßnocken, Dieseleinspritznocken und ein Gleitlager modulartig zusammenfassen, läßt sich die Stückzahl der Einzelteile z. B. für eine Sechszylinder-Dieselmaschine gegenüber dem Fügen von Einzelfunktionsteilen nach dem Stand der Technik von 26 auf 9 Teile reduzieren. Die Beispiele wurden so gewählt, daß übliche Funktionen von modernen LKW-Motoren berücksichtigt werden. Die erfindungsgemäße Technologie ermöglicht es in optimaler Weise, Konzepte mit einer Vielzahl von Nocken pro Zylinder zu realisieren, z. B. zur Berücksichtigung einspritztechnologischer Merkmale oder der Ventilabschaltung und Schließwinkel-Spreizung.

Diese Gegenüberstellung, die einen Vergleich von Nockenwellen gleicher Abmessung und Funktion aufzeigt, die konventionell, nach herkömmlicher Fügetechnik und der erfindungsgemäßen Fügetechnik hergestellt sind, zeigt die Unterschiede der verschiedenen Ausführungsformen in bezug auf Gewicht und Torsionssteifigkeit, die als polares Trägheitsmoment Jp in der Dimension cm⁴ angegeben ist. Die Vorteile der erfindungsgemäßen Wellen sind sehr stark dadurch bedingt, daß das Gewicht nur linear mit dem Rohrdurchmesser ansteigt, während sich die Torsionssteifigkeit in vierfacher Potenz mit dem Durchmesser erhöht und außerdem durch den mehrlagigen Aufbau an den Fügestellen positiv beeinflußt wird.

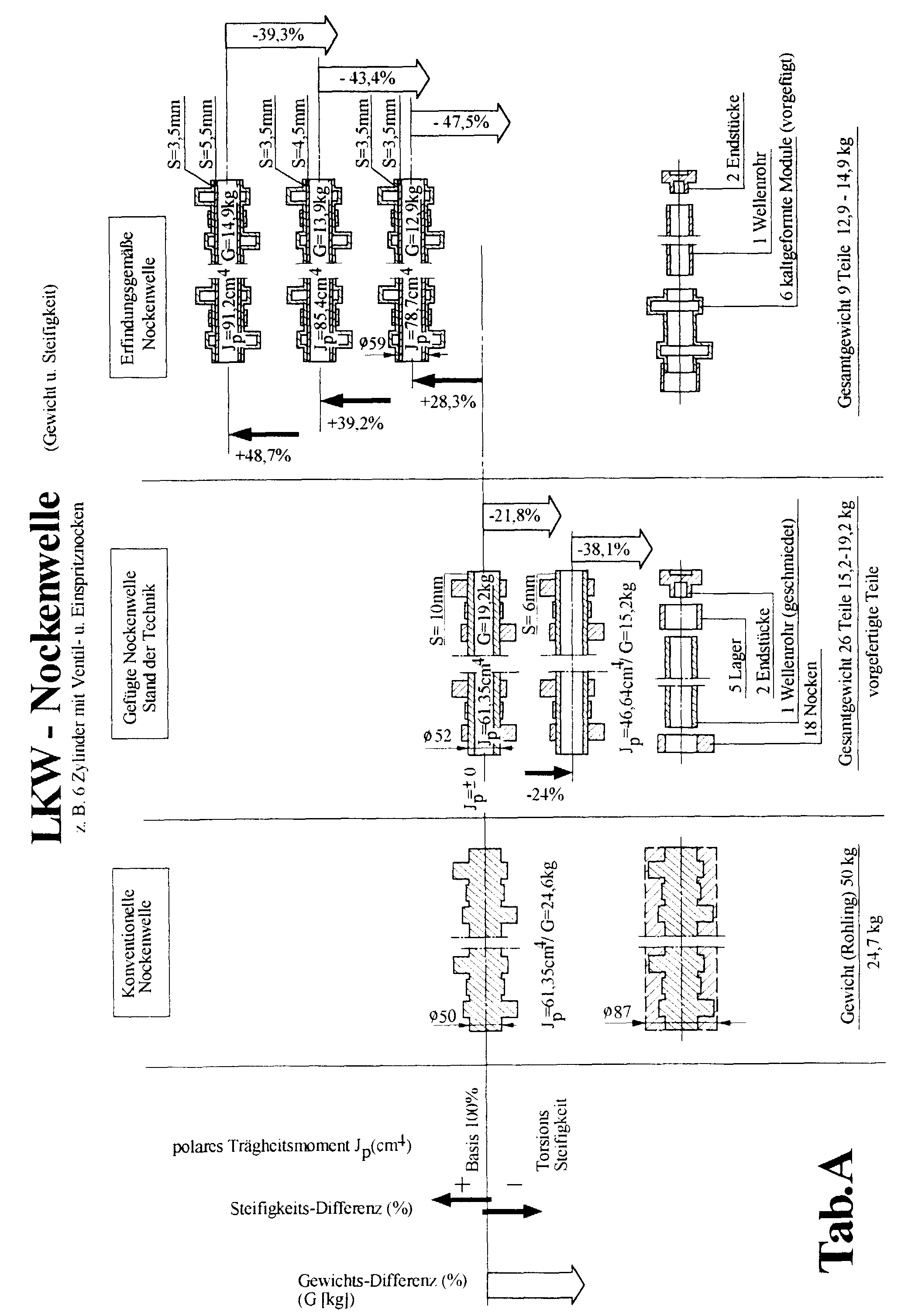

Die Erfindung wird anhand beigefügter Zeichnung näher beschrieben, in der Ausführungsbeispiele dargestellt sind. Anhand dieser Beschreibung lassen sich die Vorteile verdeutlichen, die u. a. auch durch die in den Unteransprüchen beanspruchten Ausführungsformen ermöglicht werden. In der Zeichnung zeigen
- Fig. 1: eine Längs-Schnittansicht eines Ausschnittes einer erfindungsgemäßen Welle;
- Fig. 2: einen Schnitt entlang der Linie II-II in Fig. 1;
- Fig. 3: ein Mehrfachnockenmodul, das durch Feinguß nach dem Wachsausschmelzverfahren hergestellt wurde;
- Fig. 4: ein Mehrfachnockenmodul, das aus Einzelteilen zusammengesetzt ist;
- Fig. 5: das Mehrfachnockenmodul gemäß Fig. 4, dessen Einzelteile auseinandergerückt sind;
- Fig. 6: das Mehrfachnockenmodul gemäß Fig. 4 mit einer schematischen Darstellung der Vorrichtung zum Zusammenpressen des Moduls;
- Fig. 7: eine Schnittansicht durch Vorrichtung mit Modul gemäß Fig. 6;
- Fig. 8 a und b: Beispiele für Profilrohre zur Herstellung von Einzelnocken;
- Fig. 9: eine schematische Schnittansicht des Werkzeugs (Gesenk) zum Rückformen der ringförmigen Ansätze aus einem Profilrohr;
- Fig. 10: die schematische Seitenansicht einer Anordnung gemäß IX-IX Fig. 9 um 90° aus versetztem Blickwinkel;
- Fig. 11: eine schematische Darstellung der Funktionen eines Mehrfach-Bearbeitungsautomaten zur mechanischen Bearbeitung von Profilrohrstangen zur Herstellung von Einzelnocken und
- Fig. 12: die gesonderte Darstellung der Abtrennung von Einzelnocken aus den Profilrohrstangen.

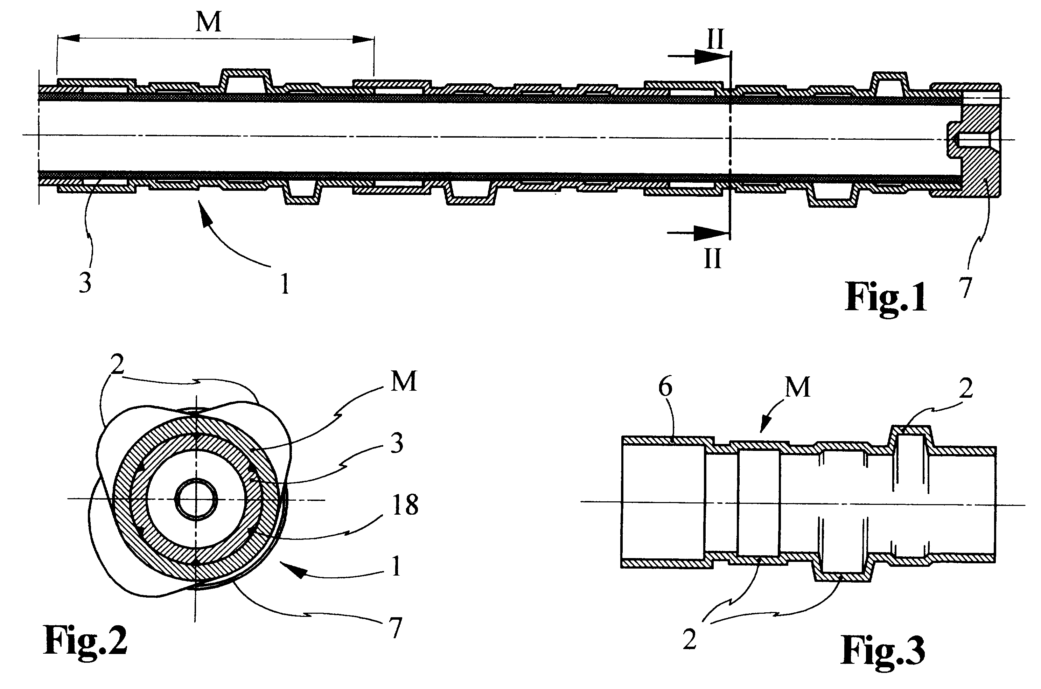

In Fig. 1 ist ein Teil einer Nockenwelle 1 für eine Diesel-LKW-Maschine dargestellt, bei der die Funktionselemente Gleitlager 6, Auslaßnocken, Einspritznocken und Einlaßnocken 2 zu einem Modul M zusammengefaßt sind, das als Mehrfachnocken hergestellt und als Ganzes auf das Wellenrohr 3 aufgefügt werden soll. Außerdem zeigt die Darstellung am rechten Ende der Welle eine Wellenabschlußkappe 7 oder ein Endstück. Im dargestellten Ausführungsbeispiel ist der Einlaßnocken höher und schmaler als der Auslaßnocken, während der Einspritznocken die typische Form mit einer sehr langgezogenen flachen und einer sehr kurzen steilen Flanke aufweist, wie gut auch im Zusammenhang mit Fig. 2 zu erkennen ist. In Fig. 2 ist auch dargestellt, daß auf dem Wellenrohr 3 beispielsweise in 60°-Teilung axial verlaufende Nuten 18 vorgesehen werden können, in die entsprechend geformte Stege oder Spitzen auf der Mehrfachnockeninnenoberfläche passen. Durch dieses Hilfsmittel läßt sich eine sehr exakte Orientierung der Mehrfachnockenposition auf dem Wellenrohr 3 ermöglichen. Innenhalb des Mehrfachnockenmoduls M können die Nockenteilungen ohnehin exakt aufeinander ausgerichtet und vorgegeben werden. Durch diese Maßnahme läßt sich das Vormontieren der aufgebauten Welle 1 sehr präzise und schnell durchführen.

Fig. 3 zeigt ein Mehrfachnocken-Modul M, das einstückig, beispielsweise nach dem Wachs-Ausschmelzverfahren, aus Lagerstahl hergestellt ist. Mit diesem Herstellverfahren lassen sich sehr hohe Genauigkeiten von beispielsweise 1/10 mm erzielen. Anhand dieser Darstellung läßt sich auch gut erkennen, daß die Fügeflächen, das sind die Innenoberflächenabschnitte mit jeweils kleinstem Durchmesser, für das gesamte Modul sehr großzügig bemessen lassen. Damit müssen die den Funktionselementen zugeordneten Oberflächenanteile nicht als Fügestellen beansprucht werden, so daß die Funktionselemente über den kleinsten Innendurchmesser hinaus "hohl" ausgebildet werden können. Trotzdem bietet die insgesamt zur Verfügung stehende Fügefläche ein bei weitem ausreichendes Reibmoment, so daß bei dem gewählten Fügeverfahren ein sicherer Kraftschluß gewährleistet ist.

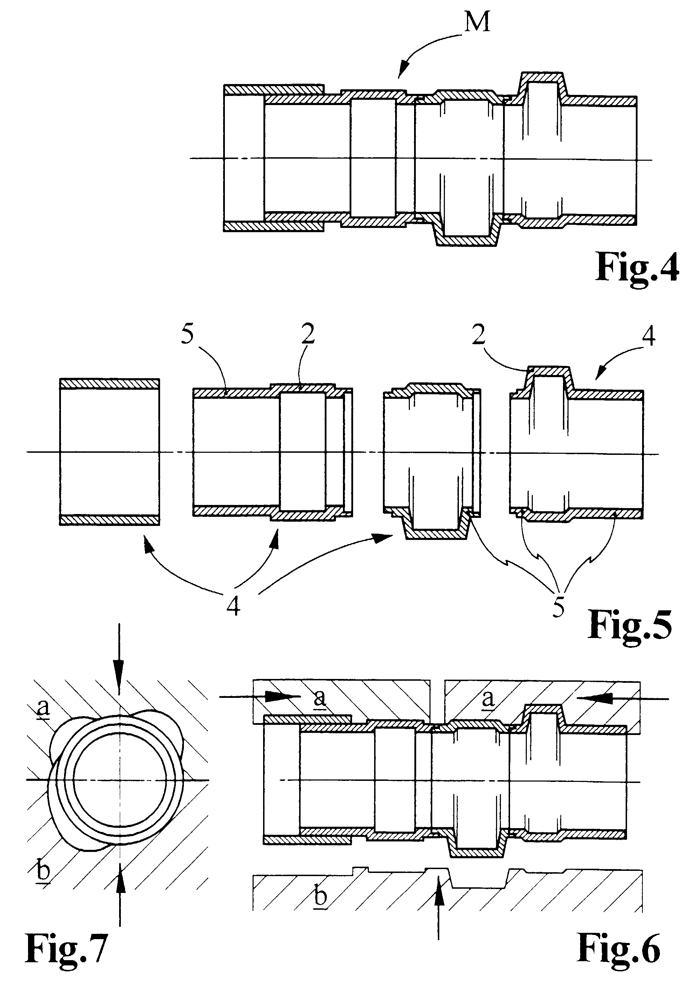

In Fig. 4 ist ein Mehrfachnocken-Modul dargestellt, das dieselben Abmessungen wie das Modul gemäß Fig. 3 hat, jedoch aus Einzelteilen 4 zusammengesetzt ist. Fig. 5 zeigt die Einzelteile 4 dieses Moduls M in auseinandergerückter Form. Hierbei ist deutlich zu erkennen, daß die ringförmigen Ansätze 5, die sich in axialer Richtung in Fortsetzung der eigentlichen Funktionselementen erstrecken, immer dann in ihrem äußeren Ende einen stufenförmig abgesetzten ringförmigen Steg mit etwa halber Wandstärke aufweisen, wenn diese mit einem anderen nichtrunden Funktionsteil benachbart sind. Die stufenförmigen Stege oder Absätze benachbarter "unrunder" Funktionsteile ergänzen sich zu voller Wandstärke und sind gemeinsam Bestandteil der Fügeabschnitte. In diesen Überlappungsbereichen sowie im Überlappungsbereich des Lagerringabschnittes 6 mit dem nichtgestuften Ansatz des benachbarten Funktionselementes ergeben sich dreilagige oder beispielsweise bei Einsatz von mehr als einer Wellenrohrlage auch mehr als dreilagige Materialkonstellationen in der gefügten Welle, was ihre Torsionssteifigkeit deutlich erhöht.

In Fig. 6 und 7 ist dargestellt, wie die Einzelteile 4 gemäß Fig. 5 zu einem Mehrfachnockenmodul M gemäß Fig. 4 zusammengepreßt werden und wie eine entsprechende Montagevorrichtung a, b schematisch aufgebaut ist. Die Einzelteile 4 werden vororientiert in ein einteiliges Untergesenk b eingelegt. Darauf senkt sich das zweiteilige Obergesenk a ab und richtet die Funktionsprofile ganz exakt aus. Daraufhin fährt das geteilte Obergesenk a aufeinander zu und schiebt die Einzelteile 4 derart ineinander, bis sie sich gegenseitig bzw. an Anschlägen im Untergesenk b axial ausrichten. Die Anschlüsse der Einzelteile 4 können so exakt vorgearbeitet sein, daß sich dabei ein Preßsitz aufbaut, der das Modul ohne weitere Maßnahmen handlingsicher macht. Es können jedoch alternativ Vorrichtungen zur Fixierung der Einzelteile 4 zueinander, beispielsweise eine Punktschweißeinrichtung vorgesehen werden.

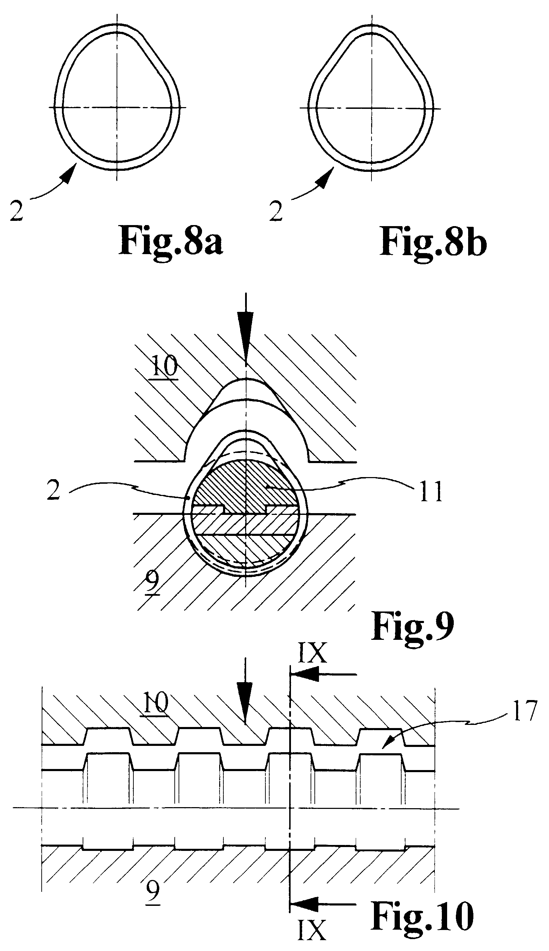

In den Fig. 8 a und 8 b sind Beispiele für Profilrohre dargestellt, aus denen die Einzelnocken hergestellt werden. Diese Profile können ganz exakt den Funktionselementprofilen entsprechen oder an den erforderlichen Stellen ein Bearbeitungsaufmaß aufweisen. In den Fig. 9 und 10 ist schematisch dargestellt, wie aus solchen Profilrohrstangen die Einzelkonturen mit zwischen den Funktionselementen liegenden ringförmigen Ansätzen 5 rückgeformt werden. Im dargestellten Ausführungsbeispiel ist dies eine Presse, mit der die ringförmigen Ansätze 5 gegen ein innerhalb des Profilrohrs angeordnetes Innenwerkzeug 11 durch Pressen rückgeformt werden. Das dargestellt Beispiel zeigt in den ausgezogenen bzw. gestrichtelten Linien ein Beispiel, bei dem der Nockengrundkreis mit dem unteren Teil des ringförmigen Ansatzes 5 fluchtet. In diesem Fall muß das Innenwerkzeug mindestens zweigeteilt sein, wie durch entsprechende Schraffur angedeutet, damit nach erfolgter Rückformung zunächst der untere Teil des Innenwerkzeugs 11 herausgezogen werden kann. Zur Erleichterung des Montierens und Demontierens können vorteilhaft Einführschrägen vorgesehen werden. Danach fällt der obere Teil des Innenwerkzeugs nach unten und kann ebenfalls aus dem Rohr herausgezogen werden. Für den Fall, daß der Nockengrundkreis radial über den ringförmigen Ansatz 5 übersteht, muß das Innenwerkzeug 11 dreigeteilt werden, wie durch die strichpunktierte Linie angedeutet, damit zunächst der mittlere Teil des Innenwerkzeugs, dann der obere und danach der untere aus dem Rohr herausgezogen werden können.

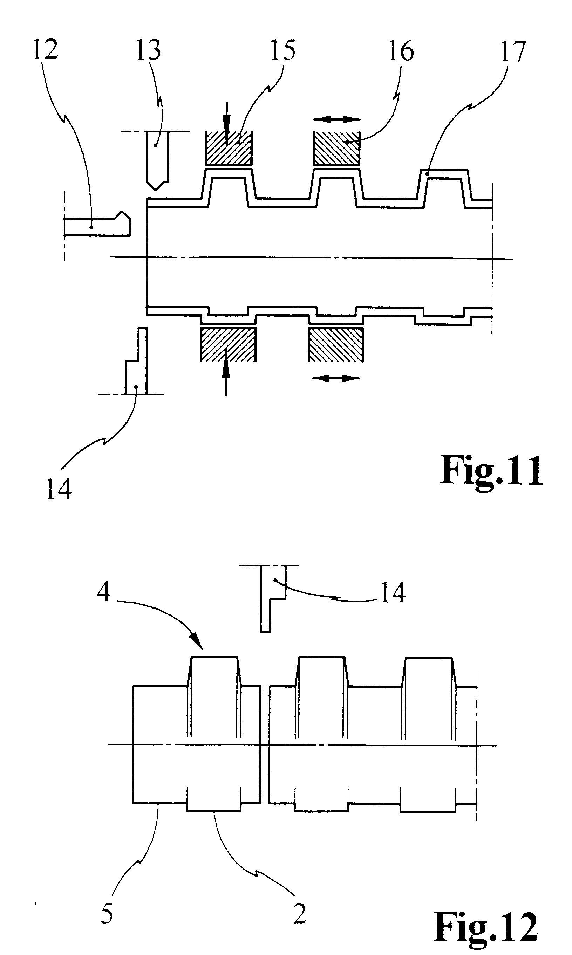

In Fig. 11 ist schematisch dargestellt, wie aus den umgeformten Profilrohrstangen 11 die Einzelfunktionsteile 4 nach entsprechender Fertigbearbeitung abgetrennt werden können. Ein solcher Stangenautomat beinhaltet Werkzeuge bzw. Vorrichtung für beispielsweise fünf Arbeitsgänge. Einmal sind Innen- 12 und Außendrehmeißel 13 vorgesehen, die die Innen- und Außenkonturen, wie sie am besten in Fig. 5 zu erkennen sind, ganz exakt herstellen können. Der Automat verfügt über ein zweigeteiltes, unabhängig voneinander axial bewegbares Spannfutter 15, 16, mit dem sowohl das Einspannen 15 als auch das Transportieren 16 in Axialrichtung erfolgen kann. Nach fertiger Innen- und Außenbearbeitung erfolgt das Trennen der Einzelteile durch einen Stechmeißel 14. In Fig. 12 ist das Trennwerkzeug, im dargestellten Fall ein Stechmeißel, und die Schnittbreite für das Abtrennung im Detail dargestellt.

In den Fig. 3, 4, 5, 6 und 12 ist deutlich zu erkennen, daß die Seitenflächen der Nocken leicht konisch ausgebildet sind, was vorteilhaft die Herstellung der Mehrfachnocken erleichtert. Das Rückformen der Profilrohrstangen, wie in den Fig. 9 und 10 dargestellt, kann in Pressen erfolgen, in denen eine Vielzahl von mehreren Metern langen Profilrohrstangen nebeneinander in entsprechende Formen eingelegt sind, wodurch sich mit einem einzigen Pressenhub eine sehr große Anzahl von Nocken gleichzeitig herstellen läßt. Als Material für die Profilrohrstangen eignen sich besonders kalt gezogene Profilrohre in Zylinderrohrqualität, bei denen Toleranzen von deutlich weniger als 1/10 mm eingehalten werden können.

Bisher wurden Beispiele für die Herstellung der Einzelnocken 4 durch Rückformen entsprechend profilierter Rohrstangen beschrieben und in der Zeichnung dargestellt. Im Ausführungsbeispiel dargestellt ist das Rückformen durch Pressen. Das Rückformen läßt sich aber auch mit anderen Umformverfahren wie Hämmern, Schmieden oder Walzen darstellen. Ebenfalls ist es möglich, die Einzelfunktionsprofile durch Innenausformung eines Rundrohrs herzustellen.

Die im dargestellten Ausführungsbeispiel gewählte Modulteilung sieht die Zusammenfassung der Funktionselemente für einen Zylinder als Teilungsmaß vor. Es ist genauso denkbar, daß das Modul aus komplementären Teil-Funktionsbereichen zweier benachbarter Zylinder zusammengefaßt wird, wenn dies aus der Verteilung der Funktionsprofile über den Umfang sinnvoll erscheint.

Die einzelnen Funktionselemente können aus den jeweils geeigneten Materialien hergestellt werden. Dabei ist es zweckmäßig, die Aufgabenteilung für Herstellung, Bearbeitung und Einstellung der Lauf- bzw. Beanspruchungsprofile zu optimieren, da nicht immer alle Eigenschaften mit einem Material ohne Nachbehandlung erzielt werden können. Wählt man z. B. einen Kugellagerstahl wie 100 Cr6, ist dieser für hohe Hertzsche Pressung geeignet, jedoch schwieriger in der Bearbeitung. Wählt man leichter zu bearbeitende Stähle, ist es zweckmäßig, sie nach ihrer Eignung zur Randschichthärtung auszusuchen. Es ist auch denkbar, leicht verformbare Einsatzstähle auszuwählen, die nach der Formgebung aufgekohlt werden. Daß für die einzelnen Funktionselemente jeweils ihrem Beanspruchungsprofil entsprechende, für die verschiedenen Funktionselemente durchaus unterschiedliche Materialien gewählt werden, liegt auf der Hand. Wichtig ist es darauf zu achten, daß in den Fügebereichen, das sind im wesentlichen die ringförmigen Ansätze 5 neben den Funktionselementen, zum Aufweiten ein vergütetes Gefüge vorliegt.

Das in Fig. 8 a dargestellte Profil ist typisch für einen DieselEinspritznocken, während das in Fig. 8 b dargestellte Profil typisch für Ein- oder Auslaßnocken ist. Für die Herstellung der gefügten Nockenwellen ist es beim Aufweiten im Hinblick auf die Geradheit der fertigen Welle zweckmäßig, die Wellen an den Lagerstellen in Prismen einzuspannen, wie sie auf dem Markt verfügbar sind.

## Patentansprüche

1. Aufgebaute hohle Welle, bestehend aus einem Innenwellenrohr (3) mit außenliegenden Funktionselementen, gefügt durch in Axialrichtung abschnittsweises radiales Aufweiten, wobei das Innenwellenrohr (3) in den Aufweitabschnitten plastisch sowie die Funktionselemente in den Aufweitabschnitten nur elastisch verformt sind und die Aufweitabschnitte zwischen den Funktionselementen liegen, wobei die Funktionselemente teilweise zu Mehrfachfunktionselementen (M) zusammengefaßt sind,
**dadurch gekennzeichnet,** daß
die Mehrfachfunktionselemente (M) aus mehreren Einzelteilen (4) bestehen, die in axialer Richtung zusammengesetzt sind, wobei nichtrunde Einzelteile (2) in axialer Richtung konzentrisch zum Grundkreis ringförmige Ansätze (5) aufweisen, deren Innendurchmesser geringfügig größer ist als der Außendurchmesser des Innenwellenrohrs (3), wobei die Ansätze (5) an den Seiten, die nichtrunden Einzelteilen (2) benachbart sind, einen ringförmigen Steg etwas halber Wandstärke derart aufweisen, daß er sich mit dem des benachbarten nichtrunden Einzelteils (2) zu voller Wandstärke ergänzt, und runde Einzelteile einen Innendurchmesser haben, der genau auf den Außendurchmesser der ringförmigen Ansätze (5) paßt.

2. Welle gemäß Anspruch 1, dadurch gekennzeichnet, daß die Mehrfachfunktionselemente (M) auf dem Innendurchmesser Stege mit einem Profil aufweisen, das dem von axial verlaufenden Nuten (18) auf der äußeren Wellenoberfläche entspricht.

3. Welle gemäß Anspruch 1 oder 2, dadurch gekennzeichnet, daß die Welle eine Nockenwelle und die Mehrfachfunktionselemente (M) Mehrfachnocken sind, die vorzugsweise Nockenelemente (2), Lagerelemente (6) und Antriebselemente aufweisen.

4. Welle gemäß einem der Ansprüche 1, 2 oder 3 dadurch gekennzeichnet, daß die ringförmigen Ansätze (5) die Aufweitabschnitte darstellen und in den Aufweitabschnitten teilweise drei Materiallagen radial übereinanderliegen.

5. Verfahren zur Herstellung von aufgebauten hohlen Wellen (1) gemäß Anspruch 1, wobei das abschittsweise Aufweiten durch hydraulischen Innenhochdruck erfolgt und die Hydraulikflüssigkeit durch eine Sonde in die Hohlwelle geführt wird, wobei der Sondenaußendurchmesser nur geringfügig kleiner ist als der Welleninnendurchmesser und die Sonde gegen die Hohlwelle an den beiden axialen Enden der Aufweitabschnitte durch Dichtelemente abgedichtet wird, dadurch gekennzeichnet, daß die Sonden, die einen lösbaren Hochdruck-Schnellanschluß aufweisen, vor dem Anschluß an den Hochdruckerzeuger in die Welle eingeführt und placiert werden und mehrere fertig zusammengesetzte und mit Sonden bestückte Wellen gleichzeitig an den Hochdruckerzeuger angeschlossen und durch Aufweiten gefügt werden.

6. Verfahren zur Herstellung von Mehrfachfunktionselementen (M), insbesondere von Mehrfachnocken, zum Einsatz für die Herstellung von aufgebauten hohlen Wellen (1) mit außenliegenden Funktionselementen (2, 3), insbesondere Nockenwellen gemäß einem der Ansprüche 3 oder 4, dadurch gekennzeichnet, daß die einzelnen Funktionselemente (2) aus Rohren mit den Funktionselementen entsprechendem Profil (d.h. Profilrohren) hergestellt und zu Mehrfachnocken (M) zusammengesetzt werden, wobei die nichtrunden Funktionselemente (2) in axialer Richtung zum Grundkreis konzentrische, ringförmige Ansätze (5) aufweisen, deren Innendurchmesser geringfügig größer ist als der Außendurchmesser des Wellenrohrs (3), und die an ihren Seitenkanten einen ringförmigen Bereich etwa halber Wandstärke derart aufweisen, daß er sich mit dem des benachbarten nichtrunden Funktionselements (2) zur vollen Wandstärke ergänzt, und wobei die ringförmigen Ansätze (5) durch Rückformung des Profilrohres hergestellt werden.

## Claims

1. An assembled hollow shaft comprising an inner shaft pipe (3) with external functional elements joined by radial widening sectionwise in the axial direction, the inner shaft pipe (3) being plastically worked in the widening sections and the functional elements being only elastically worked in the widening sections and the widening sections being between the functional elements, the functional elements being partially combined into plural functional elements (M),
characterised in that
the plural functional elements (M) comprise several component parts (4) which are assembled in an axial direction, non-round component parts (2) having, in the axial direction, annular projections concentric with the base circle, the inner diameter of which annular projections is slightly greater than the outer diameter of the inner shaft pipe (3), the projections (5), at the sides, adjacent to non-round component parts (2), having an annular ridge of approximately half the wall thickness, such that the ridge makes up the full wall-thickness with that of the adjacent, non-round component part (2), and round component parts having an inner diameter which fits exactly onto the outer diameter of the annular projections (5).

2. A shaft according to claim 1, characterised in that the plural functional elements (M) have ridges with a profile on the inner diameter, which profile corresponds to that of axially extending grooves (18) on the outer shaft surface.

3. A shaft according to claim 1 or 2, characterised in that the shaft is a cam shaft and the plural functional elements (M) are plural cams, which preferably have cam elements (2), bearing elements (6) and driving elements.

4. A shaft according to any one of claims 1, 2 or 3, characterised in that the annular projections (5) represent the widening sections and, in the widening sections, three layers of material radially lie partially on top of each other.

5. A method for manufacturing assembled hollow shafts (1) according to claim 1, where the sectionwise widening is made by hydraulic internal high-pressure and the hydraulic fluid is supplied through a well into the hollow shaft, the outer diameter of the well being only slightly smaller than the inner diameter of the shaft, and the well being sealed against the hollow shaft at the two axial ends of the widening sections by sealing elements, characterised in that the wells, which have a releasable high-pressure high-speed-connection, are inserted in the shaft and placed, before the connection, onto the high-pressure generator, and several ready-assembled shafts fitted with wells are simultaneously connected onto the high-pressure generator and are joined by widenings.

6. A method for manufacturing plural functional elements (M), in particular plural cams, for use for the manufacture of assembled hollow shafts (1) with external functional elements (2, 3), in particular cam shafts according to any one of claims 3 or 4, characterised in that the individual functional elements (2) are made from pipes with a profile (i.e. profile pipes) corresponding to the functional elements and are assembled to plural cams (M), the non-round functional elements (2) having, in an axial direction, annular projections (5) concentric with the base circle, the inner diameter of which projections is slightly greater than the outer diameter of the shaft pipe (3), and which projections at their side edges have an annular region of approximately half the wall thickness, such that the annular region makes up the full wall thickness with that of the adjacent non-round functional element (2), and where the annular projections (5) are made by a reversed-shaping of the profile pipe.

## Revendications

1. Arbre creux construit constitué d'un tube d'arbre intérieur (3) avec des éléments fonctionnels montés à l'extérieur, jointé par élargissement radial par sections en direction axiale, le tube d'arbre intérieur (3) étant déformé plastiquement dans les sections d'élargissement tandis que les éléments fonctionnels ne sont déformés qu'élastiquement dans les sections d'élargissement et les sections d'élargissement se trouvant entre les éléments fonctionnels, les éléments fonctionnels étant réunis partiellement en éléments fonctionnels multiples (M),
caractérisé en ce que les éléments fonctionnels multiples (M) sont constitués de plusieurs pièces individuelles (4) qui sont assemblées en direction axiale, des pièces individuelles (2) non circulaires présentant des saillies annulaires (5), concentriques au cercle de base en direction axiale, dont le diamètre intérieur est légèrement supérieur au diamètre extérieur du tube d'arbre intérieur (3), les saillies (5) présentant, sur les côtés qui sont adjacents à des pièces individuelles (2) non circulaires, une entretoise annulaire d'épaisseur de paroi environ moitié de telle sorte qu'elle se complète à l'épaisseur de paroi complète avec celle de la pièce individuelle (2) adjacente non circulaire, et des pièces individuelles circulaires ayant un diamètre intérieur qui est exactement adapté au diamètre extérieur des saillies annulaires (5).

2. Arbre selon la revendication 1,
caractérisé en ce que les éléments fonctionnels multiples (M) présentent sur le diamètre intérieur des entretoises avec un profil qui correspond à celui de rainures (18) s'étendant axialement sur la surface extérieure de l'arbre.

3. Arbre selon la revendication 1 ou 2,
caractérisé en ce que l'arbre est un arbre à cames et les éléments fonctionnels multiples (M) sont des cames multiples qui présentent de préférence des éléments de came (2), des éléments de palier (6) et des éléments d'entraînement.

4. Arbre selon l'une des revendications 1, 2 ou 3,
caractérisé en ce que les saillies annulaires (5) présentent les sections d'élargissement et, dans les sections d'élargissement, trois couches de matière sont partiellement superposées radialement.

5. Procédé pour la fabrication d'arbres creux (1) construits selon la revendication 1, l'élargissement par sections étant produit par haute pression hydraulique interne et le fluide hydraulique étant guidé dans l'arbre creux à travers une sonde, le diamètre extérieur de la sonde étant seulement légèrement plus faible que le diamètre intérieur de l'arbre, et la sonde étant étanchéifiée par rapport à l'arbre creux, aux deux extrémités axiales des sections d'élargissement, par des éléments d'étanchéité,
caractérisé en ce que les sondes, qui présentent un raccord rapide haute pression démontable, sont introduites et placées dans l'arbre avant le raccordement à un générateur de haute pression et plusieurs arbres préfabriqués assemblés et munis de sondes sont raccordés simultanément au générateur de haute pression et jointés par élargissement.

6. Procédé de fabrication d'éléments fonctionnels multiples (M), en particulier de cames multiples, pour la mise en oeuvre pour la fabrication d'arbres creux (1) construits à éléments fonctionnels (2,3) disposés à l'extérieur, en particulier des arbres à cames, selon l'une des revendications 3 ou 4,
caractérisé en ce que les éléments fonctionnels individuels (2) sont fabriqués à partir de tubes à profil correspondant aux éléments fonctionnels (c'est-à-dire de tubes profilés) et sont assemblés en cames multiples (M), les éléments fonctionnels (2) non circulaires présentant des saillies annulaires (5), concentriques au cercle de base en direction axiale, dont le diamètre intérieur est légèrement supérieur au diamètre extérieur du tube d'arbre (3) et qui présentent à leurs arêtes latérales une zone annulaire d'une épaisseur de paroi sensiblement moitié de telle sorte qu'elle se complète à l'épaisseur de paroi complète avec celle de l'élément fonctionnel (2) adjacent non circulaire, et les saillies annulaires (5) étant produites par contre-formage du tube profilé.
